# EUROPEAN PATENT APPLICATION

(11) **EP 4 651 531 A2**
(43) Date of publication of application: **19.11.2025**
(21) Application number: 25207323.4
(22) Date of filing: 14.01.2020
(51) Int. Cl.: H04W 8/22

(54) **INFORMATION REPORTING METHOD, APPARATUS AND DEVICE, AND STORAGE MEDIUM**

(62) Divisional of application: 20914373.4
(71) Applicant: GUANGDONG OPPO MOBILE TELECOMMUNICATIONS CORP., LTD., Dongguan, Guangdong 523860 (CN)
(72) Inventor: SHEN, Jia, N.18 Haibin Road Wusha,Chang'an Dongguan,Guangdong, 523860 (CN); TIAN, Wenqiang, N.18 Haibin Road Wusha,Chang'an Dongguan,Guangdong, 523860 (CN)
(74) Representative: Penza, Giancarlo

(57) **Abstract**

The present application relates to an information reporting method, apparatus and device, and a storage medium. The method comprises: a terminal sends AI/ML capability information to a network device, the AI/ML capability information indicating resource information of a terminal for processing an AI/ML service; the network device, according to the AI/ML capability information reported by the terminal, can flexibly switch an AI/ML model run by the terminal, distribute an appropriate AI/ML model for the terminal, and adjust AI/ML training parameters and the like. Therefore, while it is ensured that an AI/ML task can be completed, AI/ML resources such as the processing capability, storage capability, and battery of the terminal can be utilized more efficiently, so that the reliability, timeliness and efficiency of AI/ML operations based on a terminal are ensured.

## Description

### TECHNICAL FIELD

The present application relates to the fields of AI/ML and communication, and more particularly, to an information reporting method, apparatus, device and a storage medium.

### BACKGROUND

Artificial Intelligence (AI) and Machine Learning (ML) are undertaking increasingly important tasks in mobile communication terminals, for example, taking pictures, image identification, video call, Augmented Reality (AR)/Virtual Reality (VR), gaming, etc. all may relate to AI/ML services. Accordingly, it is expected that the transmission of AI/ML services on the 5th generation mobile networks (5G) and 6th generation mobile networks (6G) will become an important service in the future.

There are various scenarios when AI/ML services are applied to 5G and 6G mobile terminals such as smart phones, smart cars, drones, robots, etc., for example, an "AI/ML operation splitting" scenario where the mobile terminal cooperates with the network device to complete AI/ML services, an "AI/ML model distribution" scenario where the network device distributes the related AI/ML model to the mobile terminal, an "AI/ML model training scenario" wherein the network device and the mobile terminal train the AI/ML model, and so on. In different scenarios, chip processing resources and storage resources that mobile terminals can allocate to AI/ML services will also vary according to scenarios and over time.

### SUMMARY

In view of this, it is necessary to provide an information reporting method, apparatus, device and storage medium.

In a first aspect, there is provided a method for information reporting in an embodiment of the present invention. The method includes: sending, by a terminal, artificial intelligence (AI)/machine learning (ML) capability information to a network device; wherein the AI/ML capability information indicates resource information used by the terminal for processing an AI/ML service.

In an embodiment, the method further includes: receiving, by the terminal, AI/ML task configuration information sent by the network device; wherein the AI/ML task configuration information is used for indicating an AI/ML task configuration allocated by the network device to the terminal according to the AI/ML capability information.

In a second aspect, there is provided a method for information reporting in an embodiment of the present invention. The method includes: receiving, by a network device, AI/ML capability information sent by a terminal; wherein the AI/ML capability information indicates resource information used by the terminal for processing an AI/ML service.

In an embodiment, the method further includes: sending, by the terminal, a training result of the AI/ML training task to the network device.

In an embodiment, the method further includes: sending, by the network device, AI/ML task configuration information to the terminal; wherein the AI/ML task configuration information is used for indicating an AI/ML task configuration allocated by the network device to the terminal according to the AI/ML capability information.

In an embodiment, the method further includes:
receiving, by the network device, a training result of the AI/ML training task sent by the terminal.

In an embodiment of the first aspect or the second aspect, the resource information used by the terminal for processing the AI/ML service includes at least one piece of the following information:
a processing ability of the terminal for the AI/ML service;
information of an AI/ML model stored in the terminal for the AI/ML service;
information of a storage space of the terminal for storing an AI/ML model;
an amount of training data stored in the terminal for an AI/ML training task;
information of a storage space of the terminal for storing training data;
a performance index requirement on wireless transmission of the network device by an AI/ML operation of the terminal;
a power headroom of the terminal for an AI/ML operation; and
a battery capacity of the terminal for an AI/ML operation.

In an embodiment of the first aspect or the second aspect, the processing capability of the terminal for the AI/ML service includes the number of AI/ML operations that can be completed by the terminal per unit time.

In an embodiment of the first aspect or the second aspect, the information of the AI/ML model stored in the terminal for the AI/ML service includes any piece of the following information:
a list of AI/ML models stored in the terminal;
a list of AI/ML models newly added to the terminal; and
a list of AI/ML models deleted from the terminal.

In an embodiment of the first aspect or the second aspect, the AI/ML task configuration information includes at least one piece of the following information:
an identity of an AI/ML task to be performed by the terminal;
identities of some of AI/ML tasks to be performed by the terminal;
an identity of an act corresponding to an AI/ML task to be performed by the terminal;
an identity of an AI/ML model needed by the terminal for processing the AI/ML service;
an AI/ML model needed by the terminal for processing the AI/ML service;
an identity of an AI/ML model to be deleted from the terminal;
an AI/ML model to be trained by the terminal; and
a training parameter needed by the terminal.

In an embodiment of the first aspect or the second aspect, the AI/ML model to be deleted is an AI/ML model that has been stored in the terminal and does not conform to the AI/ML capability information of the terminal, or the AI/ML model to be deleted is an AI/ML model that has been stored in the terminal and has a matching degree with the AI/ML capability information of the terminal less than a preset threshold.

In an embodiment of the first aspect or the second aspect, the training parameter needed by the terminal includes at least one of a type of the training data, a training period, and an amount of training data per round of training.

In an embodiment of the first aspect or the second aspect, the AI/ML capability information indicates a processing capability, an available memory space of the processing capability, and a power headroom/battery capacity of the terminal for processing an AI/ML service, and a performance index requirement on wireless transmission of the network device by an AI/ML operation of the terminal.

In an embodiment of the first aspect or the second aspect, the AI/ML task configuration information includes an identity of an AI/ML model needed by the terminal for processing the AI/ML service, and/or the AI/ML task configuration information includes an identity of an AI/ML act group to be performed by the terminal; wherein the identity of the AI/ML act group is used for indicating at least one AI/ML act to be performed by the terminal.

In an embodiment of the first aspect or the second aspect, the AI/ML capability information indicates information of an AI/ML model stored in the terminal for the AI/ML service, an available storage space of the terminal for the AI/ML service, a processing capability of the terminal for the AI/ML service, and a performance index requirement on wireless transmission of the network device by an AI/ML operation of the terminal.

In an embodiment of the first aspect or the second aspect, the AI/ML task configuration information includes an AI/ML model needed by the terminal for processing the AI/ML service, and/or an identity of an AI/ML model to be deleted from the terminal.

In an embodiment of the first aspect or the second aspect, the AI/ML capability information indicates a processing capability, an amount and a storage space of stored training data, a power headroom/battery capacity of the terminal for an AI/ML training task, and a performance index requirement on wireless transmission of the network device by an AI/ML operation of the terminal.

In an embodiment of the first aspect or the second aspect, the AI/ML task configuration information includes a training parameter needed by the terminal.

In an embodiment of the first aspect or the second aspect, the training parameter needed by the terminal includes at least one of a type of training data, a training period, and an amount of training data per round of training.

In an embodiment of the first aspect or the second aspect, AI/ML capability information is carried in Uplink Control Information (UCI), Medium Access Control Control Element (MAC CE), or application layer control information.

In a third aspect, there is provided an apparatus for information reporting in an embodiment of the present invention, which includes a processing module and a sending module; wherein the processing module is used to coordinate the sending module to send AI/ ML capability information to a network device; wherein the AI/ML capability information indicates resource information used by the terminal for processing the AI/ML service.

In a fourth aspect, there is provided an apparatus for information reporting in an embodiment of the present invention, which includes a processing module and a receiving module; wherein the processing module is used to coordinate the receiving module to receive AI/ ML capability information sent by a terminal; wherein, the AI/ML capability information indicates resource information used by the terminal for processing the AI/ML service.

In a fifth aspect, there is provided a terminal device in an embodiment of the present invention, including a processor, a memory and a transceiver, the processor, the memory and the transceiver communicating with each other via an internal connection path, wherein the memory is configured to store program codes; and the processor is configured to invoke program codes stored in the memory to cooperate with the transceiver to implement the acts in the method of any embodiment of the first aspect.

In a sixth aspect, there is provided a network device in an embodiment of the present invention, including a processor, a memory and a transceiver, the processor, the memory and the transceiver communicating with each other via an internal connection path, wherein the memory is used to store program codes; and the processor is used to invoke program codes stored in the memory to cooperate with the transceiver to implement the acts in the method of any embodiment of the second aspect.

In an seventh aspect, there is provided a computer readable storage medium in an embodiment of the present invention, on which a computer program is stored, wherein when executed by a processor, the computer program implements the acts in the method of any embodiment of the first aspect.

In an eighth aspect, there an embodiment of the present invention provides a computer readable storage medium on which a computer program is stored, wherein when executed by a processor, the computer program implements the acts in the method of any embodiment of the first aspect.

According to the information reporting methods, apparatuses, devices and storage medium provided in embodiments of the present application, a terminal reports AI/ML capability information to a network device. Since the AI/ML capability information indicates the resource information used by the terminal to process the AI/ML service, the network device can flexibly switch an AI/ML model run by the terminal, distribute a suitable AI/ML model to the terminal, adjust the AI/ML training parameters and so on, according to the AI/ML capability information reported by the terminal. Therefore, while it is ensured that an AI/ML task can be achieved, AI/ML resources such as the processing capability, storage capability, battery, etc. of the terminal can be utilized more efficiently, so that the reliability, timeliness and efficiency of terminal-based AI/ML operations are ensured.

### BRIEF DESCRIPTION OF DRAWINGS

FIG. 1 is a schematic diagram of an application scenario of a method for information reporting provided in an embodiment of the present application.
FIG. 2 is a flowchart of a method for information reporting provided in an embodiment of the present application.
FIG. 3 is a flowchart of a method for information reporting provided in an embodiment of the present application.
FIG. 4 is a flowchart of a method for information reporting provided in an embodiment of the present application.
FIG. 5 is a flowchart of a method for information reporting provided in an embodiment of the present application.
FIG. 6 is an example flowchart of a method for information reporting provided in an embodiment of the present application.
FIG. 7 is an example flowchart of a method for information reporting provided in an embodiment of the present application.
FIG. 8 is an example flowchart of a method for information reporting provided in an embodiment of the present application.
FIG. 9 is an example flowchart of a method for information reporting provided in an embodiment of the present application.
FIG. 10 is an example flowchart of a method for information reporting provided in an embodiment of the present application.
FIG. 11 is a block diagram of an apparatus for information reporting provided in an embodiment of the present application.
FIG. 12 is a block diagram of an apparatus for information reporting provided in an embodiment of the present application.
FIG. 13 is a block diagram of an apparatus for information reporting provided in an embodiment of the present application.
FIG. 14 is a block diagram of an apparatus for information reporting provided in an embodiment of the present application.
FIG. 15 is a block diagram of a computer device provided in an embodiment of the present application.
FIG. 16 is a block diagram of a computer device provided in an embodiment of the present application.

### DETAILED DESCRIPTION

For better understanding of the objects, technical solutions, and advantages of the present application, the present application will be described in further detail below in conjunction with the drawings and embodiments. It should be understood that the embodiments described herein are intended to explain the present application only, but are not intended to limit the present application.

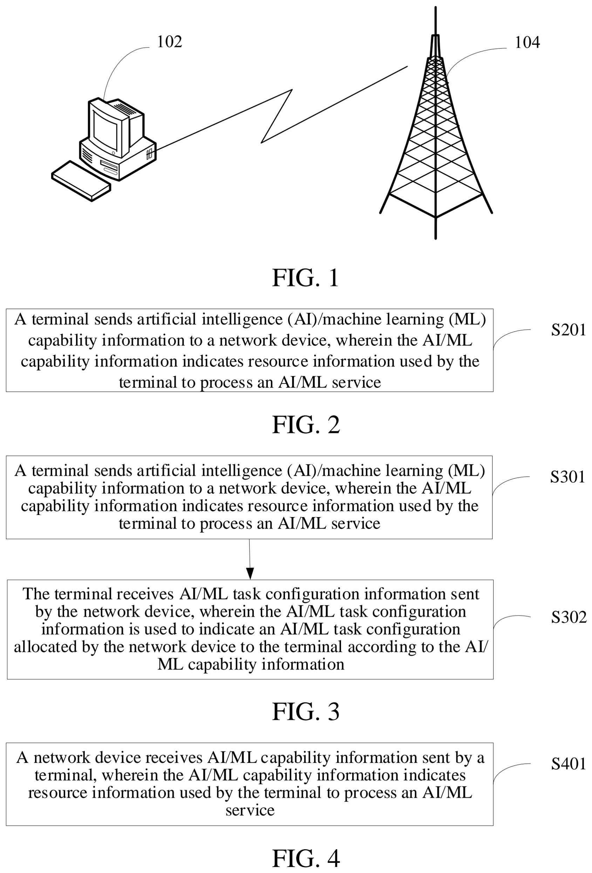

FIG. 1 is a schematic diagram of an application scenario of a method for information reporting provided in an embodiment of the present application, in which a terminal 102 communicates with a network device 104 via a network such as a 5G network, a 6G network, etc. For example, the terminal 102 may report AI/ML capability information to a network device 104, and the network device 104 may reasonably allocate corresponding AI/ML task configuration information to the terminal according to the AI/ML capability information of the terminal, thereby ensuring the reliability, timeliness and efficiency of the AI/ML operation of the terminal. Wherein, the terminal 102 may be, but is not limited to, various personal computers, notebook computers, smart phones, tablet computers and portable wearable devices, and the network device 104 may be implemented with an independent base station or a base station cluster composed of a plurality of base stations.

At present, for 5G and 6G mobile terminals such as smart phones, smart cars, drones, robots, etc., there are three major challenges to the effective application of AI/ML services: 1) the terminal lacks the computing power, storage resources and battery capacity needed to run AI/ML operations completely locally; 2) when the terminal runs AI/ML operation locally, how to obtain a needed AI/ML model in real time under the changeable AI/ML task and environment; and 3) how the terminal participates in the training of the AI/ML model.

For the challenge 1), a solution is designed in the 3rd Generation Partnership Project (3GPP), that is, offloading all AI/ML operations to 5G cloud devices or 5G edge devices. 3GPP SA1 studies and standardizes the service requirements of Cyber-Physical Control in R16 and R17 versions, and the technical solutions are Ultra-reliable and Low Latency Communications (URLLC)/Industrial Internet of Things (IIOT)/Time-Sensitive Network (TSN) in R15 and R16 versions. However, "AI/ML operation offloading" needs extremely low end-to-end return delay of "sensing-decision-control". For the ms-level return delay, not only terminals and base stations need to support URLLC, but also ubiquitous Mobile Edge Computing (MEC) deployment is needed, which is extremely challenging in the future 5G network deployment. 99.9999% of delays need a complete network coverage, which cannot be implemented in the 5G millimeter wave band. Therefore, it is necessary for the terminal to perform AI/ML operation locally. Moreover, "AI/ML operation offloading" may also bring privacy protection risks, and uploading local data of many terminals to the network side may violate privacy protection regulations and users' wishes. At present, a feasible method is that the terminal and the network cooperate to achieve AI/ML operation, that is, "AI/ML operation splitting".

For the challenge 2), AI/ML model distribution and sharing service type need to be introduced. An AI/ML model (such as a neural network) is often closely related to AI/ML task and environment. For example, neural networks used to identify faces are absolutely different from neural networks used to identify vehicle license plates. In an application of machine translation, different neural networks are needed to translate with different voices. In Automatic Speech Recognition (ASR), different noise cancellation models are needed for different background noises. Due to limited storage space of the terminal, it is impossible to store all possible AI/ML models locally. It's necessary for the terminal to have the ability of updating the AI/ML models in real time or performing transfer learning on a current model (equivalent to partial updates), that is, the network side performs "AI/ML model distribution" on the terminal.

For the challenge 3), Distributed Learning and Federated Learning based on 5G and 6G networks need to be adopted.

At present, for scenarios such as "AI/ML operation splitting", "AI/ML model distribution", "federated learning", etc., chip processing resources, storage resources, etc., that terminals can allocate for AI/ML computing are different, and the aforementioned resources will change at any time. If the network side does not acquire information, such as an AI/ML processing capacity, a storage capacity, an existing AI/ML model, data to be trained, etc., that the terminal can use for an AI/ML task, it cannot reasonably allocate the amount of AI/ML task for the terminal, distribute AI/ML models needed by the terminal, and plan AI/ML training parameters of the terminal, resulting in difficulty in ensuring the reliability, timeliness and efficiency of terminal-based AI/ML operations.

The method for information reporting provided in an embodiment of the present application can solve the technical problem that it is difficult to ensure the reliability, timeliness and efficiency of the AI/ML operation of 5G and 6G terminals when the terminals perform the AI/ML services. It should be noted that the method for information reporting of the present application is not limited to solve the above-mentioned technical problem, but can also be used to solve other technical problems, and the present application is not limited thereto.

FIG. 2 is a flowchart of a method for information reporting provided in an embodiment of the present application. The method is illustrated by taking the terminal 102 in FIG. 1 as the execution subject, and relates to a specific implementation process of the terminal reporting the AI/ML capability information to the network device. As shown in FIG. 2, the method may include an act S201.

In act S201, a terminal sends artificial intelligence (AI)/machine learning (ML) capability information to a network device; wherein, the AI/ML capability information indicates resource information used by the terminal to process an AI/ML service.

The AI/ML capability information indicates the resource information used by the terminal to process a certain AI/ML service. For example, the AI/ML capability information may directly include the available computing power, the address of the storage space, the power headroom, the battery capacity, etc., of the terminal for a certain AI/ML service, and may further include a performance index requirement on wireless transmission of a network side by an AI/ML operation of a certain AI/ML service of the terminal, etc. Alternatively, the AI/ML capability information may further indicate resource information used by the terminal to process the AI/ML service in other ways, for example, a plurality of available computing power levels can be defined in advance. The AI/ML capability information includes a serial number of an available computing power level of the terminal for a certain AI/ML service, and the AI/ML capability information may further include a serial number of a currently stored AI/ML model, a type of stored training data, an address index of the storage space, etc. Embodiments of the present application are not limited thereto.

In the embodiment, the terminal sends the AI/ML capability information to the network device in a variety of ways. The terminal can periodically report the AI/ML capability information to the network device, for example, the terminal reports the AI/ML capability information every 5 minutes. Alternatively, when the network device requests the terminal to report the AI/ML capability information, the terminal reports the AI/ML capability information, for example, after the terminal receives a report instruction sent by the network device, the terminal reports the AI/ML capability information to the network device. Alternatively, the terminal reports the AI/ML capability information to the network device when a preset trigger event is met, for example, when the available computing power, transmission rate, delay requirement, etc., of the terminal vary, the terminal reports the AI/ML capability information to the network device, and the like. Embodiments of the present application are not limited thereto.

The AI/ML capability information sent by the terminal to the network device may include all capability information related to the AI/ML service. Alternatively, the terminal may send different capability information to the network device according to different service scenarios, or may send corresponding AI/ML capability information according to requirements of the network device, which is not limited in embodiments of the present application.

Optionally, according to the AI/ML capability information reported by the terminal, the network device may switch, for the terminal, an AI/ML model suitable for a current AI/ML service, scenario and the AI/ML capability information of the terminal, or may distribute an AI/ML model suitable for an AI/ML capability of the terminal to the terminal, adjust AI/ML training parameters of the terminal, and the like.

According to the method for information reporting provided in an embodiment of the present application, the terminal reports the AI/ML capability information to the network device. Since the AI/ML capability information indicates the resource information used by the terminal to process the AI/ML service, the network device can flexibly switch an AI/ML model run by the terminal, distribute a suitable AI/ML model to the terminal, adjust the AI/ML training parameters and so on, according to the AI/ML capability information reported by the terminal. Therefore, while it is ensured that an AI/ML task can be achieved, AI/ML resources such as the processing capability, storage capability, battery, etc. of the terminal can be utilized more efficiently, so that the reliability, timeliness and efficiency of terminal-based AI/ML operations are ensured.

FIG. 3 is a flowchart of a method for information reporting provided in an embodiment of the present application. The method is illustrated by taking the terminal 102 in FIG. 1 as the execution subject, and mainly relates to a specific implementation process of a terminal receiving AI/ML task configuration information sent by a network device. As shown in FIG. 3, the method includes the acts S301 to S302.

In act S301, a terminal sends artificial intelligence (AI)/machine learning (ML) capability information to a network device; wherein, the AI/ML capability information indicates resource information used by the terminal to process an AI/ML service.

An implementation principle of this embodiment may refer to an implementation principle of the act S201 in FIG. 2 and will not be described herein.

In act S302, the terminal receives AI/ML task configuration information sent by the network device; wherein, the AI/ML task configuration information is used to indicate an AI/ML task configuration allocated by the network device to the terminal according to the AI/ML capability information.

The AI/ML task configuration information may include the amount of AI/ML tasks allocated by the network device to the terminal, an AI/ML model distributed by the network device to the terminal, an AI/ML training parameter arranged by the network device for the terminal, etc. For example, the amount of AI/ML tasks allocated by the network device to the terminal may be an AI/ML model running on the terminal or an identity of the AI/ML model, an identity of an AI/ML operation to be performed by the terminal, a serial number of an AI/ML act to be performed by the terminal, etc., which is not limited in embodiments of the present application. The AI/ML model distributed by the network device to the terminal may include one or more AI/ML models that match the AI/ML capability of the terminal, and the number of the AI/ML models is not limited in embodiments of the present application. The AI/ML training parameter arranged by the network device for the terminal may include an AI/ML model to be trained by the terminal, a training period, the amount of data trained in each round, etc., and this is not limited in embodiments of the present application.

In this embodiment, after receiving the AI/ML capability information reported by the terminal, the network device reasonably allocates the amount of AI/ML tasks, distributes the AI/ML model, arranged AI/ML training parameter, etc. for the terminal according to the AI/ML capability information. For example, when the terminal has a great available computing power, a larger AI/ML model can be run by the terminal; when the terminal has a reduced available computing power, a smaller AI/ML model is run by the terminal. Meanwhile, when the AI/ML model run by the terminal varies, a model run by the network device also varies. Alternatively, It's assumed that an AI/ML task consists of multiple acts (or portions). Wherein, a computing power of the terminal needed in acts 1 and 2 is great, but a needed communication transmission rate is low, and a transmission delay requirement is also low, so that when the terminal reports a great available computing power and/or a low achievable transmission rate and/or a low delay requirement, the network device can allocate the acts 1 and 2 to the terminal to perform, and the network device performs acts (or portions) other than the acts 1 and 2. Alternatively, the network device can select an AI/ML model suitable for the terminal according to the AI/ML task of the terminal and a performance requirement on wireless transmission reported by the terminal, and then evaluate whether the available computing power and a storage space reported by the terminal can be used for storing and running the AI/ML model, and finally determine which AI/ML models are distributed to the terminal. Alternatively, the computing power provided by the terminal is great, and/or the communication rate that can be realized is low, and/or there are much data to be processed, at this time, the network device indicates the terminal to adopt a larger amount of data and a longer training period in this round of training according to the AI/ML capability information reported by the terminal. The network device can allocate the amount of AI/ML tasks, distribute an AI/ML model, arrange AI/ML training data, etc. for the terminal according to the AI/ML capability information in various ways, which are not limited in this application.

Further, the network device can take all the information needed for processing the AI/ML service in AI/ML task indication information. For example, the network device can simultaneously carry the amount of AI/ML tasks allocated by the network device to the terminal, the AI/ML model distributed by the network device to the terminal, the AI/ML training parameter arranged by the network device for the terminal and other information, in the AI/ML task indication information. Alternatively, the network device can also carry information needed for processing AI/ML services in an actual scenario in the AI/ML task indication information according to the actual scenario. For example, in a scenario of "AI/ML operation splitting", the AI/ML task indication information carries the amount of AI/ML tasks allocated by the network device to the terminal. In a scenario of "AI/ML model distribution", the AI/ML task indication information carries the AI/ML model distributed by the network device to the terminal. In a scenario of "federated learning", the AI/ML task indication information carries the AI/ML training parameter arranged by the network device for the terminal. Specific contents of the AI/ML task indication information can be determined according to actual requirements and scenarios, which are not limited in embodiments of the present application.

In this embodiment, after receiving the AI/ML capability information reported by the terminal, the network device can send the AI/ML task configuration information to the terminal once; the network device can also send the AI/ML task configuration information to the terminal multiple times after receiving the AI/ML capability information reported by the terminal; after receiving the AI/ML capability information reported by the terminal, the network device can also send the AI/ML task configuration information to the terminal when a preset trigger event is triggered, which are not limited in embodiments of the present application.

According to the method for information reporting provided in an embodiment of the present application, the terminal sends the artificial intelligence (AI)/machine learning (ML) capability information to the network device, and the terminal receives the AI/ML task configuration information sent by the network device. Since the AI/ML capability information indicates the resource information used by the terminal to process the AI/ML service, the AI/ML task configuration information is used to indicate the network device to allocate the AI/ML task configuration to the terminal according to the AI/ML capability information, and the network device can flexibly allocate reasonable AI/ML task configuration to the terminal according to the resource information used by the terminal to process the AI/ML service. For example, the network device can flexibly switch AI/ML models run by the terminal, distribute a suitable AI/ML model to the terminal, and adjust the AI/ML training parameter. Therefore, while it is ensured that an AI/ML task can be achieved, the AI/ML resources such as processing capability, storage capacity and battery of the terminal can be more efficiently utilized, and an AI/ML task configuration and the like which are more matched with wireless spectrum resources can be allocated to the terminal, so that the wireless spectrum resources can be efficiently utilized.

FIG. 4 is a flowchart of a method for information reporting provided in an embodiment of the present application. The method is illustrated by taking the network device 104 in FIG. 1 as the execution subject, and relates to a specific implementation process of the network device receiving the AI/ML capability information reported by the terminal. As shown in FIG. 4, the method may include act S401.

In act S401, a network device receives AI/ML capability information sent by a terminal; wherein the AI/ML capability information indicates resource information used by the terminal to process an AI/ML service.

The implementation principle and beneficial effect of the method for information reporting provided in an embodiment of the present application can refer to the embodiment shown in FIG. 2, which will not be repeated here.

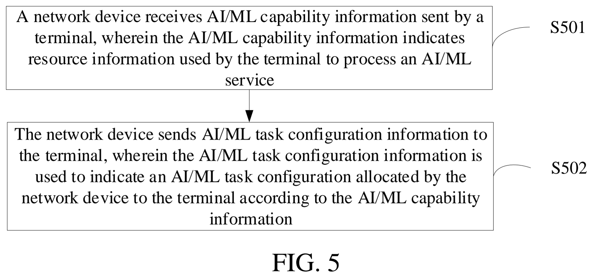

FIG. 5 is a flowchart of a method for information reporting provided in an embodiment of the present application. The method is illustrated by taking the terminal 104 in FIG. 1 as the execution subject, and mainly relates to a specific implementation process of a network device sending AI/ML task configuration information to a terminal. As shown in FIG. 5, the method includes the acts S501 to S502.

In act S501, a network device receives AI/ML capability information sent by a terminal; wherein the AI/ML capability information indicates resource information used by the terminal to process an AI/ML service.

In act S502, the network device sends AI/ML task configuration information to the terminal; wherein, the AI/ML task configuration information is used to indicate an AI/ML task configuration allocated by the network device to the terminal according to the AI/ML capability information.

The implementation principle and beneficial effect of the method for information reporting provided in an embodiment of the present application can refer to the embodiment shown in FIG. 3, which will not be repeated here.

The AI/ML capability information in the above-mentioned embodiment indicates the resource information used by the terminal to process the AI/ML service. Corresponding resource information used by the terminal to process the AI/ML service may include various kinds of information, and the resource information used by the terminal to process the AI/ML service will be described in detail below.

In an embodiment, the resource information used by the terminal to process the AI/ML service includes at least one piece of the following information:
a processing ability of the terminal for the AI/ML service;
information of an AI/ML model stored in the terminal for the AI/ML service;
information of a storage space of the terminal for storing an AI/ML model;
the amount of training data stored in the terminal for an AI/ML training task;
information of a storage space of the terminal for storing training data;
a performance index requirement on wireless transmission of the network device by an AI/ML operation of the terminal;
a power headroom of the terminal for an AI/ML operation; and
a battery capacity of the terminal for an AI/ML operation.

In this embodiment, the processing capability of the terminal for the AI/ML service may include the computing power and an available memory space of a central processing unit (CPU), the available memory space is a buffer memory space for computing. Optionally, the processing capability of the terminal for the AI/ML service includes the number of AI/ML operations that the terminal can achieve per unit time. Several processing capability levels can be predefined, and the terminal reports a serial number of one of the processing capability levels. The processing capability of the terminal for the AI/ML service is used by the network device to determine which AI/ML tasks, AI/ML functions, and AI/ML acts can be performed by the terminal.

In an embodiment, the information of the AI/ML model stored in the terminal for the AI/ML service includes any of the following information: a list of AI/ML models stored in the terminal; a list of AI/ML models newly added to the terminal; and a list of AI/ML models deleted from the terminal.

In this embodiment, the information of the AI/ML model stored in the terminal for the AI/ML service is used by the network device to determine which AI/ML models are to be distributed to the terminal or which AI/ML models are to be deleted. The list of AI/ML models stored in the terminal includes identity information such as serial numbers and names of AI/ML models currently stored in the terminal, the list of AI/ML models newly added to the terminal includes identity information of AI/ML models newly stored in the terminal, and the list of AI/ML models deleted from the terminal includes identity information of AI/ML models deleted from the terminal. The terminal can report to the network device a list of AI/ML models stored in the terminal for the AI/ML service, a list of the AI/ML models newly added to the terminal for the AI/ML service, or a list of deleted AI/ML models, which is not limited in this embodiment.

In this embodiment, the information of the storage space of the terminal for storing the AI/ML model is used for the network device to determine the storage space for an AI/ML model that is distributed to the terminal. The amount of the training data stored in the terminal for the AI/ML training task, and/or the information of the storage space of the terminal for storing the training data, is used by the network device to determine how long the training for the training data will take. The performance index requirement on wireless transmission of a network device by an AI/ML operation of the terminal may include information, such as speed, delay, reliability and other parameters, which is used by the network device to determine an AI/ML model that can meet the performance index requirement and is suitable for running by a terminal, an AI/ML model to be distributed to the terminal, and suitable AI/ML training parameters, etc. The power headroom of the terminal used for the AI/ML operation or the battery capacity of the terminal used for the AI/ML operation is used by the network device to determine an AI/ML model which can be supported by the power headroom/battery capacity, thereby determining an AI/ML model suitable for running by the terminal, an AI/ML model to be distributed to the terminal, and suitable AI/ML training parameter, etc.

According to the method for information reporting provided in this embodiment, the resource information used by the terminal to process the AI/ML service may include a plurality of different types of resource information related to the AI/ML service, the terminal can flexibly report various resource information related to AI/ML services to the network device according to actual scenario requirements, so that the network device can flexibly allocate an AI/ML task configuration to the terminal according to the resource information used by the terminal to process the AI/ML service, thereby ensuring the reliability, timeliness and efficiency of the terminal-based AI/ML operations.

The above-mentioned embodiments introduce the resource information used by the terminal to process the AI/ML service, and accordingly, the AI/ML task configuration allocated by the network device to the terminal can also have a plurality of information configuration modes, and the AI/ML task configuration information is described in detail below.

In an embodiment, the AI/ML task configuration information includes at least one piece of the following information:
an identity of an AI/ML task to be performed by the terminal;
identities of some of the AI/ML tasks to be performed by the terminal;
an identity of act corresponding to an AI/ML task to be performed by the terminal;
an identity of an AI/ML model needed by the terminal to process an AI/ML service;
an AI/ML model needed by the terminal to process an AI/ML service;
an identity of an AI/ML model to be deleted from the terminal;
an AI/ML model to be trained by the terminal; and
a training parameter needed by the terminal.

In this embodiment, the identity of the AI/ML task to be performed by the terminal may be the name, code, etc. of the AI/ML task to be performed by the terminal, and the terminal may perform a complete AI/ML task or a part of the AI/ML task, so the AI/ML task configuration information may include the identity of the AI/ML task to be performed by the terminal; it may also include identifiers of some of the AI/ML tasks to be performed by the terminal. The identity of the act corresponding to the AI/ML task to be performed by the terminal may be a serial number, name, etc. of the act, and there may be one act or a combination of a plurality of acts. The identity of the AI/ML model needed by the terminal to process the AI/ML service may be a serial number, code, name, etc. of the AI/ML model needed by the terminal to process the AI/ML service.

In an embodiment, the AI/ML model to be deleted is an AI/ML model that has been stored in the terminal and does not conform to the AI/ML capability information of the terminal, or the AI/ML model to be deleted is an AI/ML model that has been stored in the terminal and has a matching degree with the AI/ML capability information of the terminal less than a preset threshold.

In this embodiment, the network device may indicate the terminal to delete some AI/ML models that do not conform to the AI/ML capability information of the terminal, or, when the network device distributes an AI/ML model with a better performance or better matching with the AI/ML capability of the terminal to the terminal, the network device can indicate the terminal to delete an AI/ML model which is not optimal for the AI/ML capability of the terminal, thereby ensuring that the terminal stores the most suitable AI/ML model under the limited AI/ML capability, and the utilization rate of the storage resource is improved.

In an embodiment, the training parameter needed by the terminal includes at least one of a type of the training data, a training period, and an amount of training data per round of training.

According to the method for information reporting provided in an embodiment of the present application, the network device can flexibly allocate reasonable AI/ML task configuration to the terminal according to the AI/ML capability information reported by the terminal, thereby ensuring the reliability, timeliness and efficiency of the terminal-based AI/ML operations, ensuring the maximum reasonable utilization of resources of the terminal and improving the utilization rate of the resources.

Since in different scenarios, the content of the AI/ML capability information reported by a terminal to a network device may be different, and the AI/ML task configuration allocated by a network device to a terminal may also be different, the method for information reporting is described in detail in several scenarios below.

A first scenario: a mode of the AI/ML capability information reporting of the terminal in a scenario of "AI/ML operation splitting"
Due to the limited computing power, storage resources and battery capacity of mobile terminals, it is necessary to implement part of AI/ML computing in network devices. For example, a calculation which has a relatively low complexity and is sensitive to delay and privacy protection is mainly run on a terminal, and a calculation which has a relatively high complexity and is insensitive to delay and privacy protection is mainly run on a network device.

In an embodiment, the AI/ML capability information indicates the processing capability, the available memory space, the power headroom/battery capacity of the terminal for processing AI/ML services, and the performance index requirement on wireless transmission of a network device by an AI/ML operation of the terminal.

In the scenario of "AI/ML operation splitting", a splitting mode depends on an AI/ML model that the terminal can run with its current computing power, storage capacity and battery capacity, as well as the data rate and delay by which the terminal and the network device can perform transmission. For example, when the terminal has a great available computing power, a larger AI/ML model can be run by the terminal; when the terminal has a reduced available computing power, the AI/ML model that the terminal can run can only be reduced, and at the same time, the splitting mode varies, and the model run by the network device also varies. Therefore, the terminal can report the computing power, storage space, power headroom, and performance index requirement for wireless transmission between the terminal and the network device, etc., with which the AI/ML model can be run currently, for splitting and re-splitting the AI/ML operation between the terminal and the network device.

Correspondingly, the AI/ML task configuration information includes the identity of the AI/ML model needed by the terminal to process the AI/ML service, and/or the AI/ML task configuration information includes an identity of an AI/ML act group to be performed by the terminal; wherein the identity of the AI/ML act group is used to indicate at least one AI/ML act to be performed by the terminal.

In an embodiment, the AI/ML capability information reported by the terminal indicates the processing capability, the available memory space, the power headroom/battery capacity of the terminal for processing AI/ML services, and the performance index requirement on wireless transmission of a network device by an AI/ML operation of the terminal; the AI/ML task configuration information distributed by the network device to the terminal may include the identity of the AI/ML model needed by the terminal to process the AI/ML service.

In this embodiment, the terminal reports the available computing power, storage capacity, power headroom/battery capacity, communication performance index and other information for an AI/ML task to the network side. The network device determines an AI/ML operation splitting mode between the terminal and the network device according to the AI/ML capability information reported by the terminal, thereby determining the AI/ML model run by the terminal, and switching the AI/ML model run by the terminal by means of new AI/ML task configuration information.

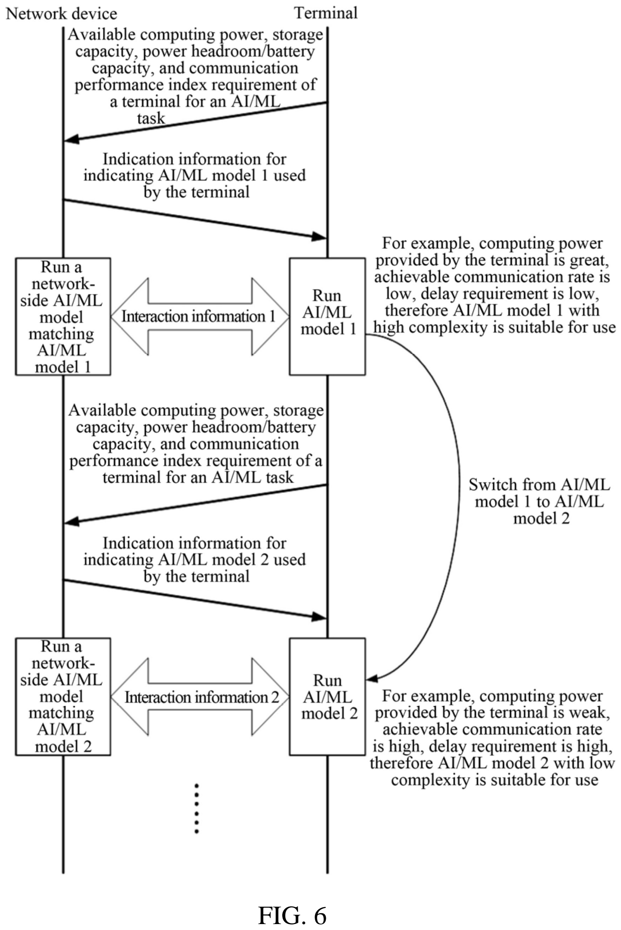

As shown in FIG. 6, It's assumed that a terminal computing power needed for running AI/ML Model 1 is great, a communication transmission rate needed is low and a transmission delay requirement is low (i.e., a very low delay is not needed), therefore, when the terminal reports at least one of a high available computing power, a low achievable transmission rate and a low delay requirement, the network device can allocate to the terminal the AI/ML model 1, and the network device adopts a network-side AI/ML model adapted to the AI/ML model 1. A terminal computing power needed for running AI/ML model 2 is low, but a communication transmission rate needed is high and the transmission delay requirement is high (i.e., a very low delay is needed), therefore, when the terminal reports at least one of a low available computing power, a high achievable transmission rate and a high delay requirement, the network device can switch the AI/ML model run by the terminal to the AI/ML model 2, and the network device adopts a network-side AI/ML model adapted to the AI/ML model 2, instead.

In another embodiment, the AI/ML capability information reported by the terminal indicates the processing capability, the available memory space, the power headroom/battery capacity of the terminal for processing AI/ML services, and the performance index requirement on wireless transmission of a network device by an AI/ML operation of the terminal; the AI/ML task configuration information distributed by the network device to the terminal may include the identity of the AI/ML act group to be performed by the terminal.

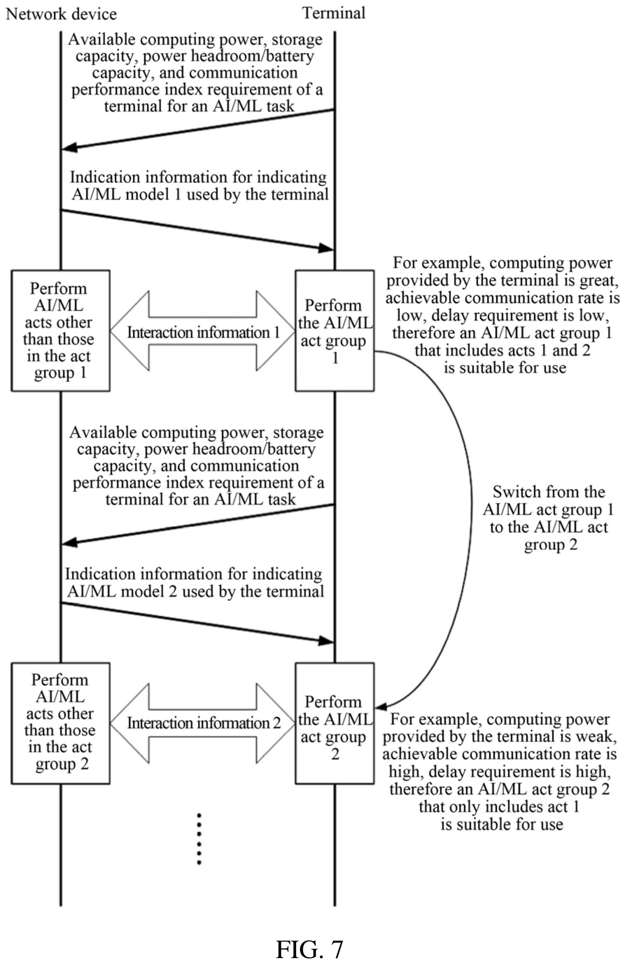

In this embodiment, according to the AI/ML capability information reported by the terminal, it is to determine which AI/ML acts of the AI/ML task are performed by the terminal and which AI/ML acts are performed by the network device, as shown in FIG. 7. The terminal reports the available computing power, storage capacity, power headroom/battery capacity, communication performance index and other information for the AI/ML task to the network device. The network device determines an AI/ML operation splitting mode between the terminal and the network device according to the AI/ML capability information reported by the terminal, thereby determining an AI/ML act which is run by the terminal, and reallocating an AI/ML act run by the terminal by means of a new AI/ML task configuration information.

As shown in FIG. 7, It's assumed that an AI/ML task consists of multiple acts (or portions). Computing power of the terminal needed for running the act 1 (or a portion of the act 1) and the act 2 (or a portion of the act 2) is great, but a communication transmission rate needed is low, and a transmission delay requirement is also low (that is, a low delay is not needed), so that when the terminal reports at least one of a great available computing power, a low achievable transmission rate and a low delay requirement, the network device can allocate the act 1 (or the portion of the act 1) and the act 2 (or the portion of the act 2) to the terminal to perform, and the network device performs other acts (or portions) other than the act 1 (or the portion of the act 1) and the act 2 (or the portion of the act 2). If the computing power of the terminal needed for running the act 1 (or the portion of the act 1) is low, but a communication transmission rate needed is high, and a transmission latency requirement is also high (that is, a low delay is needed), so that when the terminal reports a low available computing power, a high achievable transmission rate, and a high delay requirement, the network device can allocate the acts 1 and 2 to the terminal to perform, and the network device performs other acts (or portions) other than the acts 1 and 2.

According to the method for information reporting provided in an embodiment of the present application, based on the AI/ML capability information reported by the terminal, the network device can flexibly adjust the AI/ML operation of the terminal and realize the AI/ML operation splitting mode adapted to the AI/ML capability of the terminal, thereby ensuring the reliability of the AI/ML operation of the terminal while making full use of the AI/ML computing power of the terminal and the network device as much as possible.

In a second scenario: a mode of the AI/ML capability information reporting of the terminal in a scenario of "AI/ML model distribution"
Since AI/ML models (such as neural networks) are often closely related to AI/ML tasks and environments, and the storage space for storing AI/ML models in terminals is limited, it is necessary to download AI/ML models in real time, that is, the network devices perform "AI/ML model distribution" for the terminals.

In an embodiment, the AI/ML capability information indicates the information of the AI/ML model stored in the terminal for the AI/ML service, the available storage space of the terminal for the AI/ML service, the processing capability of the terminal for the AI/ML service, and the performance index requirement on wireless transmission of a network device by the AI/ML operation of the terminal.

Correspondingly, the AI/ML task configuration information includes the AI/ML model needed by the terminal to process the AI/ML service, and/or the identity of the AI/ML model to be deleted from the terminal.

In the scenario of "AI/ML model distribution", the network device distributes an AI/ML model to the terminal according to a list of existing AI/ML models, an available AI/ML computing power, an available storage space, a performance index requirement (such as rate, delay, reliability, etc.) on wireless transmission with the network device needed by an AI/ML operation, etc., which are reported by the terminal. For example, the network device can select an AI/ML model suitable for the terminal according to the AI/ML task of the terminal and a performance requirement on wireless transmission which is reported by the terminal, and then evaluate whether the available computing power and storage space reported by the terminal can be used for storing and running the AI/ML model, and finally determine whether to distribute the AI/ML model to the terminal, and which AI/ML models are distributed to the terminal. If an existing AI/ML model of a terminal is found to be redundant or non-optimal, the terminal may also be indicated to delete the AI/ML model.

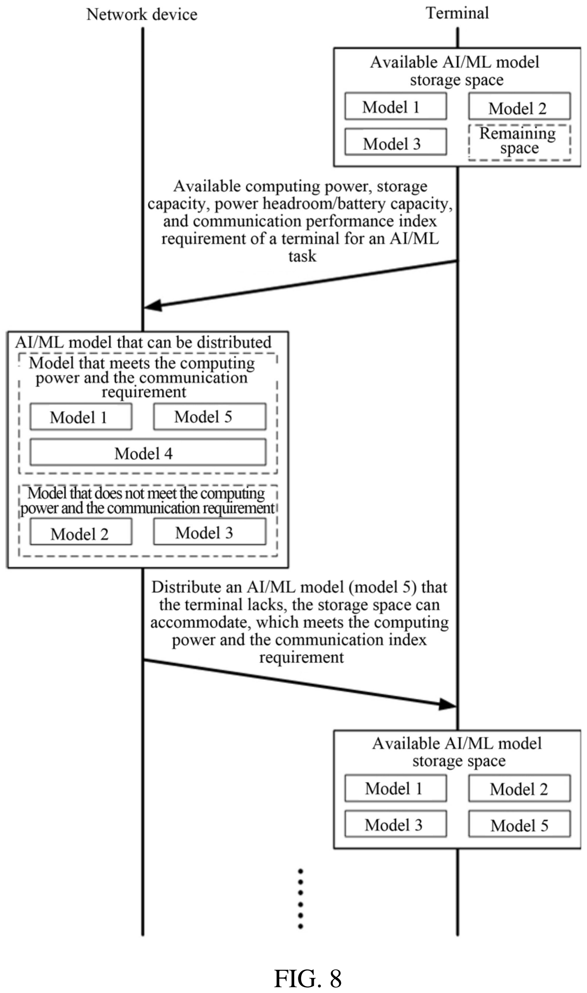

As shown in FIG. 8, it's assumed that for an AI/ML task, there are three AI/ML models, model 1, model 2 and model 3, in the storage space of the terminal, and remaining available storage space is as shown in FIG. 8. The terminal reports the stored AI/ML model list, the available storage space, the available computing power and the communication performance index requirement and the like for this AI/ML task to the network device. The AI/ML models that the network device can use to distribute to the terminal for this AI/ML task include model 1, model 2, model 3, model 4, model 5, wherein, model 1, model 4 and model 5 conform to the computing power and the communication performance index requirement reported by the terminal, but for model 4, the available storage space of the terminal is exceeded, and the available storage space of the terminal can accommodate model 5, therefore model 5 is distributed to the terminal.

According to the method for information reporting provided in an embodiment of the present application, based on the AI/ML capability information reported by the terminal, and the network device can flexibly distribute the needed AI/ML model which can be stored and used to the terminal, according to the requirements for the AI/ML model, available computing power and storage space, etc. by the terminal, thereby ensuring that the terminal has the most suitable AI/ML model in case of the limited AI/ML capability.

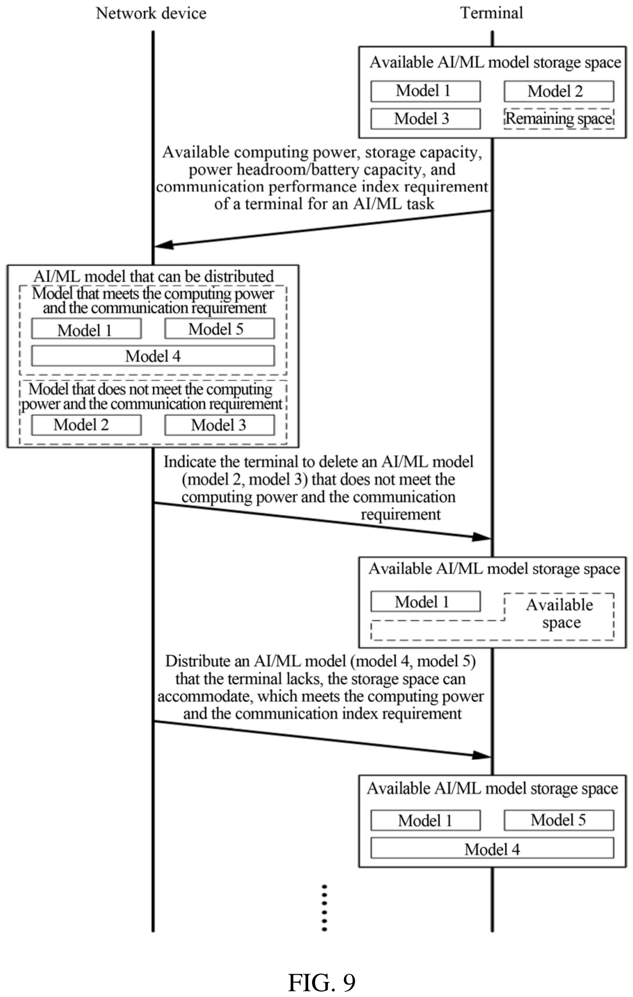

For the above-mentioned second scenario, another implementation mode is shown in FIG. 9. Since model 2 and model 3 do not conform to the computing power and the communication performance index requirement reported by the terminal, or model 4 and model 5 are more matched with the AI/ML capability of the terminal, therefore the terminal can be indicated to delete the stored Model 2 and Model 3 to release more storage space. Then model 4 and model 5 are distributed to the terminal.

According to the method for information reporting provided in an embodiment of the present application, based on the requirements for the AI/ML model by the terminal, the available computing power and the storage space, the terminal can be indicated to delete some AI/ML models which do not meet the current requirements, release the storage space and distribute an AI/ML model which is more suitable for the terminal, so as to ensure that the terminal has the most suitable AI/ML model in case of the limited AI/ML capability.

In a third scenario: a mode of the AI/ML capability information reporting of the terminal in a scenario of "distributed learning/federated learning"

Due to the uniqueness of the small environment in which a mobile terminal is located, "small sample data" collected by the mobile terminal is very valuable for training a widely available general model. However, due to privacy protection and other reasons, training data collected by a mobile terminal cannot always be uploaded to a cloud, so mobile terminal-based federated learning should be adopted to train AI/ML models.

In an embodiment, the AI/ML capability information indicates the processing capability, the amount and the storage space of stored training data, the power headroom/battery capacity of the terminal for an AI/ML training task, and the performance index requirement on wireless transmission of a network device by an AI/ML operation of the terminal.

Illustratively, in the scenario of "federated learning", for an AI/ML model training task, the training parameters depend on the available computing power, the storage capacity, the amount of data to be trained, the power headroom/battery capacity, the communication performance index requirement, etc. For example, when the available computing power of the terminal is great, a large amount of data (i.e., a large batch size) can be trained in each round; when the available computing power of the terminal is reduced, the amount of data trained in each round can only be reduced. When the amount of data to be trained is large and the achievable uplink transmission data rate is low, a large amount of training data can be used in each round, and a long training period can be used in each round, so that the model can be fully trained; when the amount of data to be trained is small and the achievable uplink transmission data rate is high, a small amount of training data can be adopted in each round, and a short training period can be adopted in each round, which is helpful for the rapid convergence of the model.

Accordingly, the AI/ML task configuration information includes a training parameter needed by the terminal. Opitonally, the training parameter needed by the terminal includes at least one of the type of the training data, a training period, and an amount of training data per round of training.

In an embodiment, the terminal sends a training result of the AI/ML training task to the network device. After completing the training according to the AI/ML task configuration information sent by the network device, the terminal can also send the training result to the network device, so that the network device combines the training results reported by individual terminals to obtain a trained AI/ML model, or further distributes the training related AI/ML task configuration information according to the results.

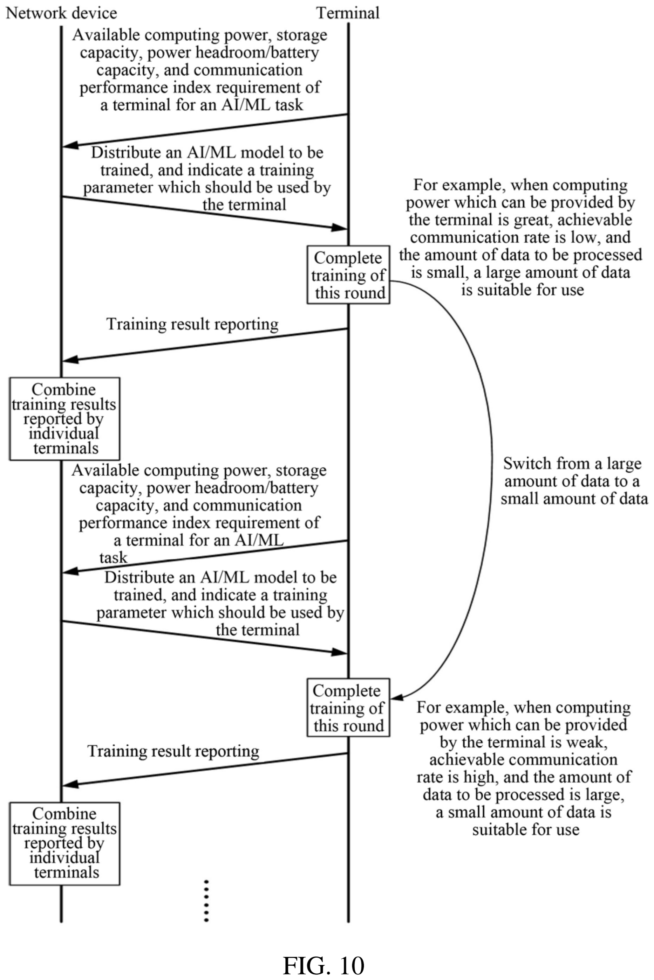

As shown in FIG. 10, It's assumed that for an AI/ML training task, when the computing power provided by the terminal is great, the communication rate that can be realized is low, and there are a large amount of data to be processed at first, at this time, the network device indicates the terminal to use a large amount of data (in batch size1) according to the AI/ML capability information reported by the terminal. When the computing power provided by the terminal is reduced, the communication rate that can be realized is improved, and there are reduced amount of data to be processed, the network device may instead indicate the terminal to use a small amount of data ( batch size2) according to the AI/ML capability information reported by the terminal.

According to the method for information reporting provided in an embodiment of the present application, based on the AI/ML capability information reported by the terminal, the network device can flexibly adjust the AI/ML training parameters for the terminal according to the available computing power, the storage capacity, the amount of data to be trained, the power headroom/battery capacity, the communication performance index requirement, etc., of the terminal for an AI/ML training task, thereby ensuring that the most appropriate AI/ML training parameters are adopted in case of the limited AI/ML capability of the terminal, and the training data of each terminal are fully utilized to realize the most efficient multi-terminal distributed training.

It should be understood that although the acts in the flow charts of FIGs. 2-10 are shown in sequence as indicated by arrows, these acts are not necessarily performed in the order indicated by the arrows. Unless explicitly stated herein, the order of performing these acts is not strictly limited, and these acts may be performed in other orders. Moreover, at least a part of the acts in FIGs. 2-10 may include multiple sub-acts or multiple stages, which may not be necessarily completed at the same time, but may be performed at different time points. These sub-acts or stages may not necessarily be performed in sequence, but may be performed in turn or alternately with other acts or at least a part of the sub-acts or stages of the other acts.

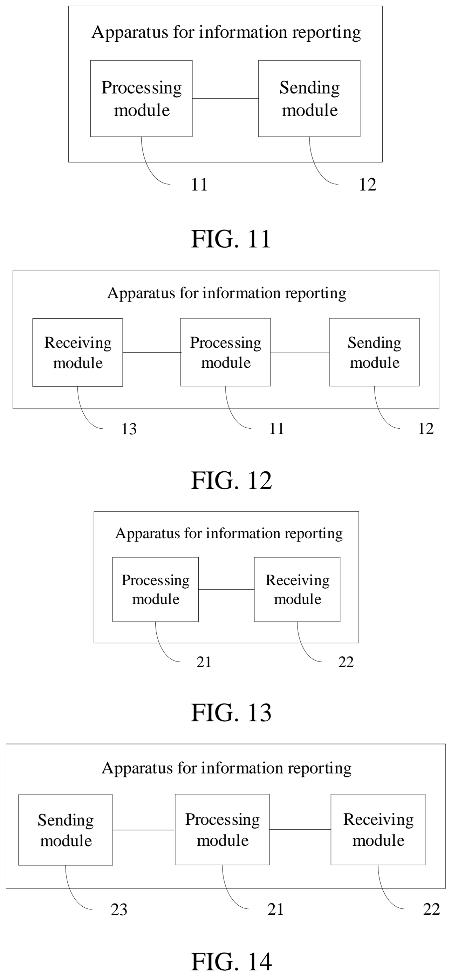

In an embodiment, as shown in FIG. 11, there is provided an apparatus for information reporting, which includes a processing module 11 and a sending module 12.

The processing module 11 is configured to coordinate the sending module 12 to send AI/ ML capability information to a network device; wherein, the AI/ML capability information indicates resource information used by a terminal to process an AI/ML service.

In an embodiment, as shown in FIG. 12, the apparatus for information reporting may further include a receiving module 13.

The receiving module 13 is used to receive AI/ML task configuration information sent by a network device; wherein, the AI/ML task configuration information is used to indicate an AI/ML task configuration allocated by the network device to the terminal according to the AI/ML capability information.

The implementation principle and technical effect of the device for an apparatus for information reporting provided according to the above-mentioned embodiment are similar to those in the above-mentioned method embodiments that take the terminal as the execution subject, and will not be repeated herein.

In an embodiment, as shown in FIG. 13, there is provided an apparatus for information reporting, which includes a processing module 21 and a receiving module 22.

The processing module 21 is used to coordinate the receiving module 22 to receive AI/ ML capability information sent by a terminal; wherein, the AI/ML capability information indicates resource information used by the terminal to process an AI/ML service.

In an embodiment, as shown in FIG. 14, the apparatus for information reporting may further include a sending module 23.

The sending module 23 is used to send AI/ML task configuration information to the terminal; wherein, the AI/ML task configuration information is used to indicate an AI/ML task configuration allocated by the network device to the terminal according to the AI/ML capability information.

The implementation principle and technical effect of the device for an apparatus for information reporting provided according to the above-mentioned embodiment are similar to those in the above-mentioned method embodiments that take the network device as the execution subject, and will not be repeated herein.

In an embodiment, the resource information used by the terminal to process the AI/ML service includes at least one piece of the following information:
a processing ability of the terminal for the AI/ML service;
information of an AI/ML model stored in the terminal for the AI/ML service;
information of a storage space of the terminal for storing an AI/ML model;
the amount of training data stored in the terminal for an AI/ML training task;
information of a storage space of the terminal for storing training data;
a performance index requirement on wireless transmission of the network device by an AI/ML operation of the terminal;
a power headroom of the terminal for an AI/ML operation; and
a battery capacity of the terminal for an AI/ML operation.

In an embodiment, the processing capability of the terminal for the AI/ML service includes the number of AI/ML operations that can be completed by the terminal per unit time.

In an embodiment, the information of the AI/ML model stored in the terminal for the AI/ML service includes any of the following information:
a list of AI/ML models stored in the terminal;
a list of AI/ML models newly added to the terminal; and
a list of AI/ML models deleted from the terminal.

In an embodiment, the AI/ML task configuration information includes at least one piece of the following information:
an identity of an AI/ML task to be performed by the terminal;
identities of some of the AI/ML tasks to be performed by the terminal;
an identity of an act corresponding to an AI/ML task to be performed by the terminal;
an identity of an AI/ML model needed by the terminal to process an AI/ML service;
an AI/ML model needed by the terminal to process an AI/ML service;
an identity of an AI/ML model to be deleted from the terminal;
an AI/ML model to be trained by the terminal; and
a training parameter needed by the terminal.

In an embodiment, the AI/ML model to be deleted is an AI/ML model that has been stored in the terminal and does not conform to the AI/ML capability information of the terminal, or the AI/ML model to be deleted is an AI/ML model that has been stored in the terminal and has a matching degree with the AI/ML capability information of the terminal less than a preset threshold.

In an embodiment, the training parameter needed by the terminal includes at least one of a type of the training data, a training period, and an amount of training data per round of training.

In an embodiment, the AI/ML capability information indicates the processing capability, the available memory space of the processing capability, the power headroom/battery capacity of the terminal for processing an AI/ML service, and the performance index requirement on wireless transmission of the network device by an AI/ML operation of the terminal.

In an embodiment, the AI/ML task configuration information includes the identity of the AI/ML model needed by the terminal to process the AI/ML service, and/or the AI/ML task configuration information includes an identity of an AI/ML act group to be performed by the terminal; wherein the identity of the AI/ML act group is used to indicate at least one AI/ML act to be performed by the terminal.

In an embodiment, the AI/ML capability information indicates the information of the AI/ML model stored in the terminal for the AI/ML service, the available storage space of the terminal for the AI/ML service, the processing capability of the terminal for the AI/ML service, and the performance index requirement on wireless transmission of the network device by the AI/ML operation of the terminal.

In an embodiment, the AI/ML task configuration information includes the AI/ML model needed by the terminal to process the AI/ML service, and/or the identity of the AI/ML model to be deleted from the terminal.

In an embodiment, the AI/ML capability information indicates the processing capability, the amount and the storage space of stored training data, the power headroom/battery capacity of the terminal for an AI/ML training task, and the performance index requirement on wireless transmission of the network device by an AI/ML operation of the terminal.

In an embodiment, the AI/ML task configuration information includes training a parameter needed by the terminal.

In an embodiment, the training parameter needed by the terminal includes at least one of a type of the training data, a training period, and an amount of training data per round of training.

In an embodiment described in FIG. 11 or FIG. 12, the sending module 12 is further configured to send the training result of the AI/ML training task to the network device.

In an embodiment described in FIG. 13 or FIG. 14, the receiving module 22 is further used to receive the training result of the AI/ML training task sent by the network device.

In an embodiment, AI/ML capability information is carried in Uplink Control Information (UCI), Medium Access Control Control Element (MAC CE), or application layer control information.

The implementation principle and technical effect of the apparatus for information reporting provided in the above-mentioned embodiment are similar to those of the above-mentioned method embodiment, and will not be repeated herein.

Specific definitions of the apparatus for information reporting may refer to the definitions of the method for information reporting, which will not be repeated here. Various modules in the apparatus for information reporting may be implemented in whole or in part by software, hardware, and combinations thereof. The various modules may be embedded in, or independent of, a processor in a computer device in the form of hardware, or may be stored in a memory in a computer device in the form of software, for the processor to invoke and execute operations corresponding to the various modules.

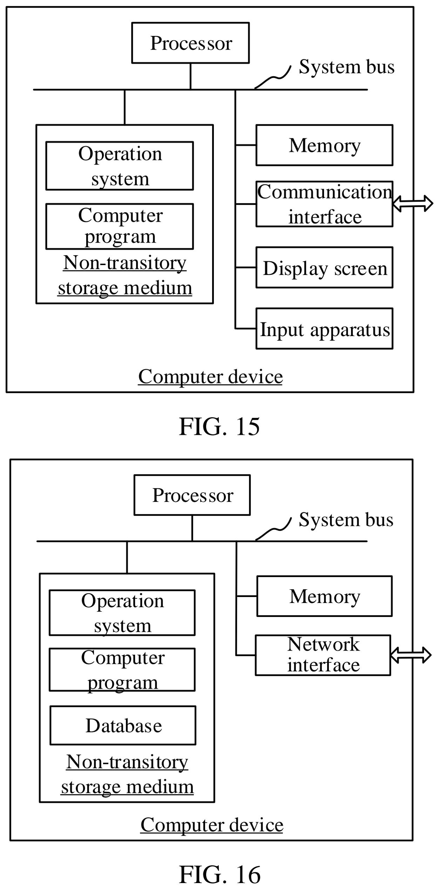

In an embodiment, a computer device is provided. The computer device may be a terminal, and a diagram of its internal structure may be as shown in FIG. 15. The computer device includes a processor, a memory, a communication interface, a display screen and an input equipment which are connected via a system bus. The processor of the computer device is used to provide computing and control capabilities. The memory of the computer device includes a non-transitory storage medium and an internal memory. The non-transitory storage medium stores an operating system and a computer program. The internal memory provides an environment for running the operating system and the computer program in the non-transitory storage medium. The communication interface of the computer device is used to communicate with external terminals in a wired or wireless manner, and the wireless manner can be realized by WIFI, operator network, NFC (Near Field Communication) or other technologies. The computer program, when executed by a processor, implements a method for information reporting. The display screen of the computer device may be a liquid crystal display screen or an electronic ink display screen. The input equipment of the computer device may be a touch layer covering on the display screen, or may be keys, a trackball or touch pad provided on the housing of the computer device, or an external keyboard, touch pad or mouse, etc.

In an embodiment, a computer device is provided. The computer device may be a network device, and a diagram of its internal structure may be as shown in FIG. 16. The computer device includes a processor, a memory, a network interface and a database which are connected via a system bus. The processor of the computer device is used to provide computing and control capabilities. The memory of the computer device includes a non-transitory storage medium and an internal memory. An operating system, a computer program and a database are stored in the non-transitory storage medium. The internal memory provides an environment for running the operating system and the computer program in the non-transitory storage medium. The database of the computer device is configured to store information reporting data. The network interface of the computer device is used to communicate with an external terminal through a network connection. The computer program, when executed by a processor, implements a method for information reporting.

Those skilled in the art may understand that a structure shown in FIG. 15 or FIG. 16 is only a block diagram of a part of a structure related to the solution of the present application, but does not constitute limitations to the computer device to which the solution of the present application is applied. A specific computer device may include more or less components than those shown in the figure, or combine some components, or have different component arrangements.

In an embodiment, there is provided a terminal device including a processor, a memory and a transceiver, the processor, the memory and the transceiver communicating with each other via an internal connection path. The memory is used to store program codes, and the processor is used to invoke program codes stored in the memory to cooperate with the transceiver to implement the acts in the method performed by the terminal in any of the embodiments in FIGs. 2-10.

The implementation principle and technical effect of the terminal device according to the above-mentioned embodiment are similar to those of the above method embodiment, and will not be repeated herein.

In an embodiment, there is provided a network device including a processor, a memory and a transceiver, the processor, the memory and the transceiver communicating with each other via an internal connection path. The memory is used to store program codes, and the processor is used to invoke program codes stored in the memory to cooperate with the transceiver to implement the acts in the method performed by the network device in any of the embodiments in FIGs. 2-10.

The implementation principle and technical effect of the network device according to the above-mentioned embodiment are similar to those of the above method embodiment, and will not be repeated herein.

In an embodiment, there is provided a computer readable storage medium, on which a computer program is stored, wherein when the computer program is executed by a processor, acts in the method performed by the terminal in any of the embodiments in FIGs. 2-10 are implemented.

In an embodiment, there is provided a computer readable storage medium, on which a computer program is stored, wherein when the computer program is executed by a processor, acts in the method performed by the network device in any of the embodiments in FIGs. 2-10 are implemented.

The implementation principle and technical effect of the computer readable storage medium according to the above embodiment are similar to those of the above method embodiment, and will not be repeated herein.

### Additional Embodiments

Embodiment 1. A method for information reporting, including:
sending, by a terminal, artificial intelligence (AI)/machine learning (ML) capability information to a network device; wherein the AI/ML capability information indicates resource information used by the terminal for processing an AI/ML service.

Embodiment 2. The method of Embodiment 1, further including:
receiving, by the terminal, AI/ML task configuration information sent by the network device; wherein the AI/ML task configuration information is used for indicating an AI/ML task configuration allocated by the network device to the terminal according to the AI/ML capability information.

Embodiment 3. The method of Embodiment 1 or 2, wherein the resource information used by the terminal for processing the AI/ML service includes at least one piece of the following information:
a processing ability of the terminal for the AI/ML service;
information of an AI/ML model stored in the terminal for the AI/ML service;
information of a storage space of the terminal for storing an AI/ML model;
an amount of training data stored in the terminal for an AI/ML training task;
information of a storage space of the terminal for storing training data;
a performance index requirement on wireless transmission of the network device by an AI/ML operation of the terminal;
a power headroom of the terminal for an AI/ML operation; and
a battery capacity of the terminal for an AI/ML operation.

Embodiment 4. The method of Embodiment 3, wherein the processing capability of the terminal for the AI/ML service includes a number of AI/ML operations which are capable of being completed by the terminal per unit time.

Embodiment 5. The method of Embodiment 3, wherein the information of the AI/ML model stored in the terminal for the AI/ML service includes any piece of the following information:
a list of AI/ML models stored in the terminal;
a list of AI/ML models newly added to the terminal; and
a list of AI/ML models deleted from the terminal.

Embodiment 6. The method of Embodiment 2, wherein the AI/ML task configuration information includes at least one piece of the following information:
an identity of an AI/ML task to be performed by the terminal;
identities of some of AI/ML tasks to be performed by the terminal;
an identity of an act corresponding to an AI/ML task to be performed by the terminal;
an identity of an AI/ML model needed by the terminal for processing the AI/ML service;
an AI/ML model needed by the terminal for processing the AI/ML service;
an identity of an AI/ML model to be deleted from the terminal;
an AI/ML model to be trained by the terminal; and
a training parameter needed by the terminal.

Embodiment 7. The method of Embodiment 6, wherein the AI/ML model to be deleted is an AI/ML model that has been stored in the terminal and does not conform to the AI/ML capability information of the terminal, or the AI/ML model to be deleted is an AI/ML model that has been stored in the terminal and has a matching degree with the AI/ML capability information of the terminal less than a preset threshold.

Embodiment 8. The method of Embodiment 6, wherein the training parameter needed by the terminal includes at least one of a type of training data, a training period, and an amount of training data per round of training.

Embodiment 9. The method of Embodiment 2, wherein the AI/ML capability information indicates a processing capability, an available memory space of the processing capability, and a power headroom/battery capacity of the terminal for processing an AI/ML service, and a performance index requirement on wireless transmission of the network device by an AI/ML operation of the terminal.

Embodiment 10. The method of Embodiment 9, wherein the AI/ML task configuration information includes an identity of an AI/ML model needed by the terminal for processing the AI/ML service, and/or the AI/ML task configuration information includes an identity of an AI/ML act group to be performed by the terminal; wherein the identity of the AI/ML act group is used for indicating at least one AI/ML act to be performed by the terminal.

Embodiment 11. The method of Embodiment 2, wherein the AI/ML capability information indicates information of an AI/ML model stored in the terminal for the AI/ML service, an available storage space of the terminal for the AI/ML service, a processing capability of the terminal for the AI/ML service, and a performance index requirement on wireless transmission of the network device by an AI/ML operation of the terminal.

Embodiment 12. The method of Embodiment 11, wherein the AI/ML task configuration information includes an AI/ML model needed by the terminal for processing the AI/ML service, and/or an identity of an AI/ML model to be deleted from the terminal.

Embodiment 13. The method of Embodiment 2, wherein the AI/ML capability information indicates a processing capability, an amount and a storage space of stored training data, and a power headroom/battery capacity of the terminal for an AI/ML training task, and a performance index requirement on wireless transmission of the network device by an AI/ML operation of the terminal.

Embodiment 14. The method of Embodiment 13, wherein the AI/ML task configuration information includes a training parameter needed by the terminal.

Embodiment 15. The method of Embodiment 14, wherein the training parameter needed by the terminal includes at least one of a type of training data, a training period, and an amount of training data per round of training.

Embodiment 16. The method of Embodiment 13, further including:
sending, by the terminal, a training result of the AI/ML training task to the network device.

Embodiment 17. The method of Embodiment 1, wherein the AI/ML capability information is carried in Uplink Control Information (UCI), Medium Access Control Control Element (MAC CE), or application layer control information.

Embodiment 18. A method for information reporting, including:
receiving, by a network device, AI/ML capability information sent by a terminal; wherein the AI/ML capability information indicates resource information used by the terminal for processing an AI/ML service.

Embodiment 19. The method of Embodiment 18, further including:
sending, by the network device, AI/ML task configuration information to the terminal; wherein the AI/ML task configuration information is used for indicating an AI/ML task configuration allocated by the network device to the terminal according to the AI/ML capability information.

Embodiment 20. The method of Embodiment 18 or 19, wherein the resource information used by the terminal for processing the AI/ML service includes at least one piece of the following information:
a processing ability of the terminal for the AI/ML service;
information of an AI/ML model stored in the terminal for the AI/ML service;
information of a storage space of the terminal for storing an AI/ML model;
an amount of training data stored in the terminal for an AI/ML training task;
information of a storage space of the terminal for storing training data;
a performance index requirement on wireless transmission of the network device by an AI/ML operation of the terminal;
a power headroom of the terminal for an AI/ML operation; and
a battery capacity of the terminal for an AI/ML operation.

Embodiment 21. The method of Embodiment 20, wherein the processing capability of the terminal for the AI/ML service includes a number of AI/ML operations which are capable of being completed by the terminal per unit time.

Embodiment 22. The method of Embodiment 20, the information of the AI/ML model stored in the terminal for the AI/ML service includes any piece of the following information:
a list of AI/ML models stored in the terminal;
a list of AI/ML models newly added to the terminal; and
a list of AI/ML models deleted from the terminal.

Embodiment 23. The method of Embodiment 19, wherein the AI/ML task configuration information includes at least one piece of the following information:
an identity of an AI/ML task to be performed by the terminal;
identities of some of AI/ML tasks to be performed by the terminal;
an identity of an act corresponding to an AI/ML task to be performed by the terminal;
an identity of an AI/ML model needed by the terminal for processing the AI/ML service;
an AI/ML model needed by the terminal for processing the AI/ML service;
an identity of an AI/ML model to be deleted from the terminal;
an AI/ML model to be trained by the terminal; and
a training parameter needed by the terminal.

Embodiment 24. The method of Embodiment 23, wherein the AI/ML model to be deleted is an AI/ML model that has been stored in the terminal and does not conform to the AI/ML capability information of the terminal, or the AI/ML model to be deleted is an AI/ML model that has been stored in the terminal and has a matching degree with the AI/ML capability information of the terminal less than a preset threshold.

Embodiment 25. The method of Embodiment 23, wherein the training parameter needed by the terminal includes at least one of a type of training data, a training period, and an amount of training data per round of training.

Embodiment 26. The method of Embodiment 19, wherein the AI/ML capability information indicates a processing capability, an available memory space of the processing capability, and a power headroom/battery capacity of the terminal for processing an AI/ML service, and a performance index requirement on wireless transmission of the network device by an AI/ML operation of the terminal.

Embodiment 27. The method of Embodiment 26, wherein the AI/ML task configuration information includes an identity of an AI/ML model needed by the terminal for processing the AI/ML service, and/or the AI/ML task configuration information comprises an identity of an AI/ML act group to be performed by the terminal; wherein the identity of the AI/ML act group is used for indicating at least one AI/ML act to be performed by the terminal.

Embodiment 28. The method of Embodiment 19, wherein the AI/ML capability information indicates the information of an AI/ML model stored in the terminal for the AI/ML service, an available storage space of the terminal for the AI/ML service, a processing capability of the terminal for the AI/ML service, and a performance index requirement on wireless transmission of the network device by an AI/ML operation of the terminal.

Embodiment 29. The method of Embodiment 28, wherein the AI/ML task configuration information includes an AI/ML model needed by the terminal for processing the AI/ML service, and/or an identity of an AI/ML model to be deleted from the terminal.

Embodiment 30. The method of Embodiment 19, wherein the AI/ML capability information indicates a processing capability, an amount and a storage space of stored training data, and a power headroom/battery capacity of the terminal for an AI/ML training task, and a performance index requirement on wireless transmission of the network device by an AI/ML operation of the terminal.

Embodiment 31. The method of Embodiment 30, wherein the AI/ML task configuration information includes a training parameter needed by the terminal.

Embodiment 32. The method of Embodiment 31, wherein the training parameter needed by the terminal includes at least one of a type of training data, a training period, and an amount of training data per round of training.

Embodiment 33. The method of Embodiment 30, further including:
receiving, by the network device, a training result of the AI/ML training task sent by the terminal.

Embodiment 34. The method of Embodiment 18, wherein the AI/ML capability information is carried in Uplink Control Information (UCI), Medium Access Control Control Element (MAC CE), or application layer control information.

Embodiment 35. An apparatus for information reporting, including a processing module and a sending module; wherein
the processing module is configured to coordinate the sending module to send AI/ ML capability information to a network device; wherein the AI/ML capability information indicates resource information used by a terminal for processing an AI/ML service.

Embodiment 36. An apparatus for information reporting, including a processing module and a receiving module; wherein
the processing module is configured to coordinate the receiving module to receive AI/ ML capability information sent by a terminal; wherein the AI/ML capability information indicates resource information used by the terminal for processing an AI/ML service.

Embodiment 37. A terminal device, including a processor, a memory and a transceiver, the processor, the memory and the transceiver communicating with each other via an internal connection path, wherein
the memory is configured to store program codes; and
the processor is configured to invoke program codes stored in the memory to cooperate with the transceiver to implement acts in the method of any one of Embodiments 1 to 17.

Embodiment 38. A network device, including a processor, a memory and a transceiver, the processor, the memory and the transceiver communicating with each other via an internal connection path, wherein
the memory is configured to store program codes; and
the processor is configured to invoke program codes stored in the memory to cooperate with the transceiver to implement acts in the method of any one of Embodiments 18 to 34.

Embodiment 39. A computer readable storage medium, including a computer program stored thereon, wherein when the computer program is executed by a processor, acts of the method of any one of Embodiments 1 to 17 are implemented.

Embodiment 40. A computer readable storage medium, including a computer program stored thereon, wherein when the computer program is executed by a processor, acts of the method of any one of Embodiments 18 to 34 are implemented.

Those of ordinary skill in the art can understand that all or part of the processes in the above method embodiments can be accomplished by instructing related hardware through a computer program, which may be stored in a non-transitory computer readable storage medium, and may include the processes in various method embodiments above when executed. Any reference to a memory, a storage, a database or other media used in the embodiments provided in the present application can include non-transitory and/or transitory memories. The non-transitory memory may include a Read Only Memory (ROM), a Programmable ROM (PROM), an Electrically Programmable ROM (EPROM), an Electrically Erasable Programmable ROM (EEPROM), or a flash memory. The transitory memory may include a random access memory (RAM) or an external cache memory. By way of illustration but not limitation, a RAM is available in various forms, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Rambus Direct RAM (RDRAM), a Direct Rambus Dynamic RAM (DRDRAM), and a Rambus Dynamic RAM (RDRAM).

Various technical features in the above embodiments can be combined arbitrarily. For the sake of brevity of the description, not all possible combinations of the technical features in the above embodiments are described. However, as long as there is no conflict in the combinations of these technical features, they should be considered as falling within the scope specified in this specification. The embodiments described above only provide several implementations of the present application, and description thereof is relatively specific and detailed, but is not to be interpreted as limitations to the protection scope of the present invention. It should be noted that without departing from the conception of the present application, those of ordinary skill in the art may also make a number of variations and improvements, which shall fall into the protection scope of the present application. The protection scope of the present application is subject to the appended claims.

## Claims

1. A method for information reporting, comprising:
sending, by a terminal, artificial intelligence (AI)/machine learning (ML) capability information to a network device; wherein the AI/ML capability information indicates resource information used by the terminal for processing an AI/ML service.

2. The method of claim 1, further comprising:
receiving, by the terminal, AI/ML task configuration information sent by the network device; wherein the AI/ML task configuration information is used for indicating an AI/ML task configuration allocated by the network device to the terminal according to the AI/ML capability information.

3. The method of claim 1 or 2, wherein the resource information used by the terminal for processing the AI/ML service comprises at least one piece of the following information:
a processing ability of the terminal for the AI/ML service;
information of an AI/ML model stored in the terminal for the AI/ML service;
information of a storage space of the terminal for storing an AI/ML model;
an amount of training data stored in the terminal for an AI/ML training task;
information of a storage space of the terminal for storing training data;
a performance index requirement on wireless transmission of the network device by an AI/ML operation of the terminal;
a power headroom of the terminal for an AI/ML operation; and
a battery capacity of the terminal for an AI/ML operation.

4. The method of claim 3, wherein the processing capability of the terminal for the AI/ML service comprises a number of AI/ML operations which are capable of being completed by the terminal per unit time.

5. The method of claim 3, wherein the information of the AI/ML model stored in the terminal for the AI/ML service comprises any piece of the following information:
a list of AI/ML models stored in the terminal;
a list of AI/ML models newly added to the terminal; and
a list of AI/ML models deleted from the terminal.

6. The method of claim 2, wherein the AI/ML task configuration information comprises at least one piece of the following information:
an identity of an AI/ML task to be performed by the terminal;
identities of some of AI/ML tasks to be performed by the terminal;
an identity of an act corresponding to an AI/ML task to be performed by the terminal;
an identity of an AI/ML model needed by the terminal for processing the AI/ML service;
an AI/ML model needed by the terminal for processing the AI/ML service;
an identity of an AI/ML model to be deleted from the terminal;
an AI/ML model to be trained by the terminal; and
a training parameter needed by the terminal,
wherein the AI/ML model to be deleted is an AI/ML model that has been stored in the terminal and does not conform to the AI/ML capability information of the terminal, or the AI/ML model to be deleted is an AI/ML model that has been stored in the terminal and has a matching degree with the AI/ML capability information of the terminal less than a preset threshold,
wherein the training parameter needed by the terminal comprises at least one of a type of training data, a training period, and an amount of training data per round of training.

7. The method of claim 2, wherein the AI/ML capability information indicates a processing capability, an available memory space of the processing capability, and a power headroom/battery capacity of the terminal for processing an AI/ML service, and a performance index requirement on wireless transmission of the network device by an AI/ML operation of the terminal,
wherein the AI/ML task configuration information comprises an identity of an AI/ML model needed by the terminal for processing the AI/ML service, and/or the AI/ML task configuration information comprises an identity of an AI/ML act group to be performed by the terminal; wherein the identity of the AI/ML act group is used for indicating at least one AI/ML act to be performed by the terminal.

8. The method of claim 2, wherein the AI/ML capability information indicates information of an AI/ML model stored in the terminal for the AI/ML service, an available storage space of the terminal for the AI/ML service, a processing capability of the terminal for the AI/ML service, and a performance index requirement on wireless transmission of the network device by an AI/ML operation of the terminal,
wherein the AI/ML task configuration information comprises an AI/ML model needed by the terminal for processing the AI/ML service, and/or an identity of an AI/ML model to be deleted from the terminal.

9. The method of claim 2, wherein the AI/ML capability information indicates a processing capability, an amount and a storage space of stored training data, and a power headroom/battery capacity of the terminal for an AI/ML training task, and a performance index requirement on wireless transmission of the network device by an AI/ML operation of the terminal.

10. The method of claim 9, wherein the AI/ML task configuration information comprises a training parameter needed by the terminal,
wherein the training parameter needed by the terminal comprises at least one of a type of training data, a training period, and an amount of training data per round of training;
and/or,
the method further comprises:
sending, by the terminal, a training result of the AI/ML training task to the network device.

11. A method for information reporting, comprising:
receiving, by a network device, AI/ML capability information sent by a terminal; wherein the AI/ML capability information indicates resource information used by the terminal for processing an AI/ML service.

12. The method of claim 11, further comprising:
sending, by the network device, AI/ML task configuration information to the terminal; wherein the AI/ML task configuration information is used for indicating an AI/ML task configuration allocated by the network device to the terminal according to the AI/ML capability information.

13. An apparatus for information reporting, comprising a processing module and a sending module; wherein
the processing module is configured to coordinate the sending module to send AI/ ML capability information to a network device; wherein the AI/ML capability information indicates resource information used by a terminal for processing an AI/ML service.

14. An apparatus for information reporting, comprising a processing module and a receiving module; wherein
the processing module is configured to coordinate the receiving module to receive AI/ ML capability information sent by a terminal; wherein the AI/ML capability information indicates resource information used by the terminal for processing an AI/ML service.

15. The apparatus of claim 14, wherein the resource information used by the terminal for processing the AI/ML service comprises at least one piece of the following information:
a processing ability of the terminal for the AI/ML service;
information of an AI/ML model stored in the terminal for the AI/ML service;
information of a storage space of the terminal for storing an AI/ML model;
an amount of training data stored in the terminal for an AI/ML training task;
information of a storage space of the terminal for storing training data;
a performance index requirement on wireless transmission of the network device by an AI/ML operation of the terminal;
a power headroom of the terminal for an AI/ML operation; and
a battery capacity of the terminal for an AI/ML operation.
